# EUROPÄISCHE PATENTANMELDUNG

(11) **EP 2 781 765 A1**
(43) Veröffentlichungstag der Anmeldung: **24.09.2014**
(21) Anmeldenummer: 13160082.7
(22) Anmeldetag: 20.03.2013
(51) Int. Cl.: F16B 11/00

(54) **Befestigungselement zur Anbringung an einer Wand**

(71) Anmelder: Sulzer Mixpac AG, 9469 Haag (CH)
(72) Erfinder: Clemens, Victor, 6900 Bregenz (AT); Paus, Sebastian, 9445 Rebstein (CH)
(74) Vertreter: Manitz, Finsterwald & Partner GbR

(57) **Zusammenfassung**

Die Erfindung betrifft ein Befestigungselement zur Anbringung an einer Wand.

Die Erfindung geht aus von einem Befestigungselement zur Anbringung an einer Wand mit einem Anlageelement mit einer Haftfläche (21) und einer Einfüllöffnung (18), über welche ein fliessfähiges Haftmittel zwischen Haftfläche (21) und Wand bringbar ist. An der Haftfläche (21) sind Positionierungselemente (23a, 23b, 23c, 23d) angeordnet, mittels welchen das Anlageelement an der Wand positioniert werden kann.

Um eine gute Haftung an der Wand zu ermöglichen, wird erfindungsgemäss vorgeschlagen, dass das Positionierungselement (23a, 23b, 23c, 23d) eine veränderliche, von einem Abstand zur Austrittsöffnung (18) abhängige Breite aufweist. Die Breite nimmt zumindest abschnittsweise mit steigendem Abstand zur Austrittsöffnung (18) ab und ist bei einem Maximalabstand (29) zur Austrittsöffnung (18) minimal. Damit wird erreicht, dass das Haftmittel beim Einbringen zwischen Wand und Haftfläche (21) sehr gut um das Positionierungselement (23a, 23b, 23c, 23d) herum strömen kann.

## Beschreibung

Die Erfindung betrifft ein Befestigungselement zur Anbringung an einer Wand gemäß dem Oberbegriff des Anspruchs 1.

In der US 4,822,656 wird ein Befestigungselement zur Anbringung an einer Wand beschrieben. Das Befestigungselement weist ein Halterungselement in Form eines Stifts auf, der über ein Aussengewinde verfügt. Über das Halterungselement kann ein Gegenstand am Befestigungselement und damit an der Wand befestigt werden. Das Befestigungselement verfügt ausserdem über ein Anlageelement mit einer Haftfläche. Vor dem Anbringen an der Wand wird ein Haftmittel auf die Haftfläche aufgebracht. Anschliessend wird ein Montagerahmen, in den das Befestigungselement eingesteckt ist, mittels Positionierungselemente in Form von Klebestreifen an der Wand positioniert, wobei noch kein Kontakt zwischen dem Haftmittel und Wand besteht. Dann wird das Befestigungselement innerhalb des Montagerahmens in eine Andrückposition gebracht, in der die Haftfläche samt Haftmittel gegen die Wand gedrückt wird. Nach dem Aushärten des Haftmittels wird der Montagerahmen entfernt und entsorgt.

In der WO 01/81774 A1 wird ein Befestigungselement zur Anbringung an einer Wand beschrieben, bei welchem kein Montagerahmen benötigt wird. Es verfügt ebenfalls über ein Halterungselement zur Halterung eines Gegenstands. Es weist ein Anlageelement mit einer Haftfläche und einer Rückseite und einen Einfüllkanal auf, welcher von der Rückseite des Anlageelements zu einer Austrittsöffnung in der Haftfläche des Anlageelements führt. Über den Einfüllkanal kann zum Anbringen des Befestigungselements an der Wand ein fliessfähiges Haftmittel zwischen Haftfläche und Wand eingebracht werden. Vor dem Einbringen des Haftmittels wird das Anlageelement und damit das Befestigungselement mit einem Positionierungselement in Form eines doppelseitigen Klebebands an der Wand positioniert.

Die WO 01/81774 A1 macht keine Aussagen über die Ausgestaltung oder die Form des Positionierungselements. Versuche haben gezeigt, dass es bei Verwendung von handelsüblichen Klebestreifen in Rechteckform (wenn man die Dicke der Klebestreifens vernachlässigt) zu einer ungleichen Verteilung des Haftmittels zwischen der Haftfläche und der Wand kommt. Dies wiederum führt dazu, dass die Haftfläche und damit das Befestigungselement nicht optimal an der Wand befestigt sind.

Demgegenüber ist es insbesondere die Aufgabe der Erfindung, ein Befestigungselement vorzuschlagen, welches ohne die Verwendung eines Montagerahmes an einer Wand angebracht werden kann und dennoch eine sehr gute Haftung an der Wand ermöglicht. Erfindungsgemäß wird diese Aufgabe mit einem Befestigungselement mit den Merkmalen des Anspruchs 1 gelöst.

Das erfindungsgemässe Befestigungselement zur Anbringung an einer Wand verfügt über ein Halterungselement zur Halterung eines Gegenstands, ein Anlageelement mit einer Haftfläche und einer Rückseite und einen Einfüllkanal, welcher von der Rückseite des Anlageelements zu einer Austrittsöffnung in der Haftfläche des Anlageelements führt. Über den Einfüllkanal ist ein fliessfähiges Haftmittel zwischen Haftfläche und Wand bringbar. Das Befestigungselement weist ausserdem ein Positionierungselement auf, mittels welchem das Anlageelement an der Wand positioniert werden kann. Unter "Positionieren" soll in diesem Zusammenhang verstanden werden, dass das Befestigungselement vor dem endgültigen Anbringen an einer gewünschten Position an der Wand positioniert und damit (vor-)befestigt wird.

Erfindungsgemäss weist das Positionierungselement eine veränderliche, von einem Abstand zur Austrittsöffnung abhängige Breite auf. Die Breite des Positionierungselements ergibt sich aus einer Ausdehnung parallel zur Haftfläche und senkrecht zu einer Strömungsrichtung von der Austrittsöffnung durch einen Flächenschwerpunkt des Positionierungselements. Die Breite nimmt zumindest abschnittsweise mit steigendem Abstand zur Austrittsöffnung ab und ist bei einem Maximalabstand zur Austrittsöffnung minimal. Die Breite beim Maximalabstand ist dabei zumindest bezogen auf den Abschnitt mit abnehmender Breite zum Maximalabstand hin minimal. Es ist möglich, dass das Positionierungselement in einem anderen Abschnitt, der näher an der Austrittsöffnung liegt, auch eine geringere Breite als beim Maximalabstand aufweist.

Damit wird erreicht, dass das Haftmittel beim Einbringen zwischen Wand und Haftfläche sehr gut um das Positionierungselement herum strömen kann und sich nicht in Strömungsrichtung gesehen hinter dem Positionierungselement Bereiche ergeben, in die kein oder vergleichsweise wenig Haftmittel gelangt.

Somit ermöglicht die erfindungsgemässe Ausgestaltung des Positionierungselement, dass mit Ausnahme des Positionierungselements der komplette Bereich zwischen Haftfläche und Wand gleichmässig mit Haftmittel befüllt werden kann und so eine optimale Haftung des Befestigungselements an der Wand gewährleistet wird. Durch das gute Herumströmen des Haftmittels ist ausserdem die Menge an Haftmittel, die ungenutzt aus dem Zwischenraum zwischen Haftfläche und Wand heraus quillt, sehr gering.

Das Halterungselement und das Anlageelement sind beispielsweise aus Metall oder Kunststoff hergestellt und fest miteinander verbunden. Die Verbindung kann beispielsweise durch Kleben oder Schweissen, insbesondere Reibschweissen hergestellt werden. Es ist auch möglich, dass das Halterungselement und das Anlageelement einstückig ausgeführt sind. Dies ist insbesondere dann vorteilhaft, wenn die Elemente aus Kunststoff bestehen. In diesem Fall können sie mit einem Spritzgussverfahren hergestellt werden.

Unter einer "Wand" soll eine Fläche verstanden werden, an der ein Gegenstand, beispielsweise ein Haken, eine Verkleidung, ein Regal oder ähnliches befestigt werden kann. Die Wand ist insbesondere zumindest bereichsweise eben ausgeführt. Es ist aber möglich, dass die Wand gekrümmt ausgeführt ist. Ausserdem kann die Wand auch zwei oder drei insbesondere ebene Teilflächen aufweisen, welche in einem Winkel insbesondere 90° zueinander angeordnet sind. Das Anlageelement und damit die Haftfläche weisen dann insbesondere eine mit der Kontur der Wand korrespondierende Form auf. Die Haftfläche kann dann insbesondere aus einer ersten Teil-Haftfläche, einer zweiten Teil-Haftfläche und eventuell einer dritten Teil-Haftfläche ausgeführt sein, welche in einem Winkel von beispielsweise 90° zueinander angeordnet sind. Die Teil-Haftflächen sind insbesondere als ebene Flächen ausgeführt. Geringe Unterschiede zwischen der Kontur der Wand und der Form der Haftfläche können auch durch das Haftmittel ausgeglichen werden. Die Wand kann beispielsweise Teil eines Gebäudes, eines Fahrzeugs oder eines Flugzeugs sein. Die Wand kann insbesondere als Teil eines Flugzeugs ausgeführt sein, an welcher mittels erfindungsgemässen Befestigungselementen eine Innenverkleidung montiert wird.

Bei der geometrischen Definition und Beschreibung des Positionierungselements wird eine Dicke des Positionierungselements, also eine Ausdehnung senkrecht zur Haftfläche und damit auch senkrecht zur Wand vernachlässigt. Das Positionierungselement wird vereinfacht als eine zweidimensionale Fläche angesehen, die parallel zur Wand und zur Haftfläche ausgerichtet ist. Damit weist das Positionierungselement einen Flächenschwerpunkt auf, der zur Definition der Strömungsrichtung genutzt wird. Der Flächenschwerpunkt kann wie allgemein bekannt mittels geometrischer Überlegungen oder durch Integration bestimmt werden. Er kann auch rein mechanisch durch Ausbalancieren eines homogenen Körpers mit der entsprechenden Form und konstanter Dicke und Dichte bestimmt werden. Bei achsensymmetrischen Flächen mit mindestens zwei Symmetrieachsen liegt der Flächenschwerpunkt im Schnittpunkt der Symmetrieachsen.

Bei der Festlegung der Strömungsrichtung wird auch auf die Austrittsöffnung Bezug genommen. In diesem Zusammenhang wird unter der Austrittsöffnung nur deren Zentrum, also ihr Flächenschwerpunkt verstanden. Bei einer kreisrunden Austrittsöffnung ist dies der Mittelpunkt der Querschnittsfläche. Die genannte Rückseite des Anlageelements, von welcher der Einfüllkanal zur Austrittsöffnung führt, zeichnet sich dadurch aus, dass sie kein Teil der Haftfläche ist und nach dem Positionieren des Befestigungselements an der Wand noch zugänglich ist. Sie kann, muss aber nicht parallel zur Haftfläche ausgeführt sein.

Als Haftmittel kann beispielsweise ein Zwei-Komponenten-Klebstoff, insbesondere ein Epoxid Klebstoff verwendet werden.

Das Positionierungselement nimmt insbesondere einen Flächenanteil zwischen 3 und 20 %, bevorzugt zwischen 5 und 10 % der Haftfläche ein. Damit ergibt sich ein sehr guter Kompromiss zwischen der Restfläche, die für das Haftmittel und damit zur dauerhaften Befestigung zur Verfügung steht und einer Haltekraft des Positionierungselements nach dem Positionieren des Befestigungselements an der Wand und damit beim Einfüllen des Haftmittels.

In Ausgestaltung der Erfindung ist das Positionierungselement so angeordnet, dass sein Flächenschwerpunkt in einem Bereich von 20 bis 70 % einer Gesamt-Fliessstrecke des Haftmittels liegt. Die Bereichsangabe ist dabei ausgehend von der Austrittsöffnung bezogen. Damit werden eine besonders vorteilhafte Umströmung des Positionierungselements und damit eine besonders gute und gleichmässige Verteilung des Haftmittels ermöglicht. Unter einer Gesamt-Fliessstrecke soll dabei die Strecke in Strömungsrichtung von einem Rand der Austrittsöffnung in Richtung Positionierungselement bis zu einem Rand der Haftfläche verstanden werden.

In Ausgestaltung der Erfindung ist das Positionierungselement so angeordnet, dass sich sowohl zwischen der Austrittsöffnung in der Haftfläche des Anlageelements und dem Positionierungselement als auch zwischen Positionierungselement und einem Rand der Haftfläche des Anlageelements eine freie Fliessstrecke des Haftmittels ergibt, welche mindestens 20 % der Gesamt-Fliessstrecke des Haftmittels beträgt. Dies ermöglicht einerseits, dass sich das Haftmittel nach dem Austreten aus der Austrittsöffnung gut verteilen kann und anderseits, dass sich die beiden beim Umströmen des Positionierungselements ergebenden Teilströme des Haftmittels nach dem Positionierungselement wieder verbinden können und so keine Bereiche zwischen Haftfläche und Wand ohne Haftmittel entstehen. Damit wird eine besonders gute und gleichmässige Verteilung des Haftmittels ermöglicht, was zu einer besonders stabilen Fixierung des Befestigungselements an der Wand führt.

In Ausgestaltung der Erfindung weist das Positionierungselement eine Länge auf, welche sich aus einer Ausdehnung in Strömungsrichtung ergibt. Ein Verhältnis aus Länge zu maximaler Breite des Positionierungselements ist grösser als 1,1. Besonders bevorzugt liegt das genannte Verhältnis zwischen 2 und 3. Damit wird eine besonders vorteilhafte Umströmung des Positionierungselements ermöglicht.

In Ausgestaltung der Erfindung nimmt die Breite des Positionierungselements ausgehend von einem Minimalabstand zur Austrittsöffnung zunächst bis zum Erreichen einer maximalen Breite zu, um dann wieder abzunehmen und beim Maximalabstand zur Austrittsöffnung minimal zu sein. Damit wird eine besonders vorteilhafte Umströmung des Positionierungselements ermöglicht.

In Ausgestaltung der Erfindung weist das Positionierungselement wenigstens eine Symmetrieachse auf. Eine längste Symmetrieachse schliesst einen Winkel γ von maximal 60°, insbesondere maximal 45° mit der Strömungsrichtung ein. Grössere Winkel γ würden eine Umströmung des Positionierungselements behindern.

Das Positionierungselement ist insbesondere ellipsenförmig oder rautenförmig ausgeführt. Es kann auch eine Form aufweisen, welche sich aus zwei Bögen, insbesondere zwei Kreisbögen ergibt. Unter einem Bogen wird in diesem Zusammenhang eine beliebig nach einer Seite gekrümmte Linie verstanden. Diese Formen ermöglichen eine besonders vorteilhafte Umströmung des Positionierungselements.

In Ausgestaltung der Erfindung weist das Positionierungselement eine Dicke zwischen 0,05 und 3,00 mm, insbesondere zwischen 0,1 und 0,5 mm auf. Damit kann sich auch eine entsprechend dicke Schicht aus Haftmittel zwischen Haftfläche und Wand ausbilden, was eine besonders gute Fixierung der Befestigungselements an der Wand ermöglicht.

In Ausgestaltung der Erfindung weist das Positionierungselement einen Haftklebstoff auf. Unter einem Haftklebstoff ist ein Klebstoff zu verstehen, der nach dem Auftragen auf ein Trägermaterial hochviskos und dauerklebrig bleibt und dann durch Druck auf ein Substrat aufgebracht werden kann und dort haften bleibt. Das Positionierungselement kann beispielsweise als ein doppelseitiges Klebeband ausgeführt sein. Damit lässt sich das Positionierungselement besonders einfach handhaben. Ausserdem ist ein Ausgangsmaterial mit Haftklebstoff kostengünstig und in grosser Auswahl auf dem Markt erhältlich. Die einzelnen Positionierungselemente können nach dem Anbringen auf der Haftfläche insbesondere nur mit einer einzigen Abdeckfolie abgedeckt sein. Damit ist eine besonders einfache Handhabung möglich. Zusätzlich kann die Abdeckfolie eine überstehende Lasche aufweisen, mittels welche die Abdeckfolie insbesondere auch mit Handschuhen abgezogen werden kann.

In Ausgestaltung der Erfindung ist das Positionierungselement aufsprühbar ausgeführt. Das Positionierungselement wird dann insbesondere dadurch auf die Haftfläche aufgebracht, dass ein Sprühkleber mit Haftklebstoff auf die Haftfläche aufgesprüht wird. Zur Sicherstellung der gewünschten Form des Positionierungselements wird insbesondere eine Schablone verwendet, die alle Bereiche der Haftfläche ausser den für das Positionierungselement vorgesehenen Bereich abdeckt. Damit kann das Positionierungselement sehr einfach und schnell und damit kostengünstig auf die Haftfläche aufgebracht werden. Dies ist besonders dann vorteilhaft, wenn nicht nur ein, sondern mehrere Positionierungselemente vorgesehen sind. Diese können alle gemeinsam in nur einem Arbeitsschritt aufgebracht werden. Die Positionierungselemente werden insbesondere schon einige Zeit vor dem Anbringen des Befestigungselements an der Wand aufgebracht und mit einer Abdeckfolie abgedeckt. In diesem Fall wird insbesondere nur eine einzige Abdeckfolie für alle Positionierungselemente einer Haftfläche verwendet. Damit kann durch Abziehen dieser einen Abdeckfolie das Befestigungselement sehr schnell und einfach für das Anbringen an der Wand vorbereitet werden.

In Ausgestaltung der Erfindung weist das Befestigungselement mehrere Positionierungselemente auf, welche insbesondere gleichmässig um die Austrittsöffnung verteilt sind. Damit wird eine sichere Positionierung des Befestigungselements und ausserdem eine gleichmässige Verteilung des Haftmittels ermöglicht.

In Ausgestaltung der Erfindung weist das Halterungselement eine hauptsächlich hohlzylindrische Form auf und bildet einen ersten Teil des Einfüllkanals. Damit wird ein besonders einfacher Aufbau des Befestigungselements ermöglicht. Das Halterungselement weist zur Halterung eines Gegenstands insbesondere ein Aussengewinde auf, das mit einem korrespondierenden Innengewinde des Gegenstands zusammenwirken kann. Es sind aber auch andere Halterungsarten, wie beispielsweise eine Schnapp-oder Klickverbindung möglich.

In Ausgestaltung der Erfindung ist das Anlageelement als eine kreisrunde Scheibe ausgeführt, durch deren Mittelachse ein zweiter Teil des Einfüllkanals verläuft, welcher an der Austrittsöffnung endet. Dies ermöglicht einen einfachen und kostengünstigen Aufbau des Befestigungselements. Ausserdem ermöglicht diese Form, dass eine möglichst geringe Menge an Haftmittel ausreicht, um den gesamten Bereich zwischen Haftfläche und Wand auszufüllen. Dies wird insbesondere dadurch erreicht, dass die Gesamt-Fliessstrecke in alle Richtungen gleich ist. Das Anlageelement weist insbesondere einen Durchmesser von 2 bis 6 cm auf. Es sind aber je nach Anwendungsfall auf kleinere oder grössere Durchmesser möglich.

Es ist auch möglich, dass das Anlageelement nicht genau eine kreisrunde Aussenkontur aufweist, sondern in den Bereichen, in denen Positionierungselemente angeordnet sind, leicht "abgeflacht" ist. Da das Haftmittel beim Einbringen zwischen Haftfläche und Wand durch die Positionierungselement abgebremst wird, kann damit erreicht werden, dass das Haftmittel an der gesamten Aussenkontur den Rand erreicht, ohne an einer Stelle über den Rand hinaus zu treten. Damit kann erreicht werden, dass eine minimale Menge an Haftmittel ausreicht, um den gesamten Bereich zwischen Haftfläche und Wand auszufüllen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: ein an einer Wand positioniertes Befestigungselement,
- Fig. 2: eine Draufsicht auf eine Haftfläche mit Positionierungselementen,
- Fig. 3: eine Draufsicht auf ein zweites Ausführungsbeispiel einer Haftfläche mit Positionierungselementen ,
- Fig. 4: eine Draufsicht auf ein drittes Ausführungsbeispiel einer Haftfläche mit Positionierungselementen,
- Fig. 5: eine Draufsicht auf ein viertes Ausführungsbeispiel einer Haftfläche mit Positionierungselementen und
- Fig. 6: eine Draufsicht auf ein fünftes Ausführungsbeispiel einer Haftfläche mit Positionierungselementen.

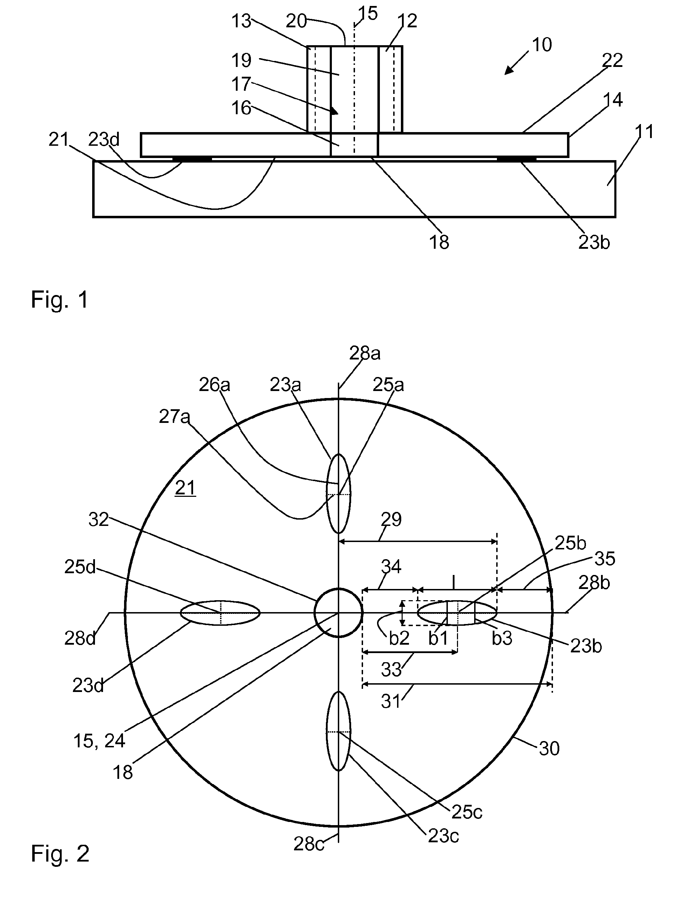

Gemäss Fig. 1 weist ein an einer ebenen Wand 11 positioniertes Befestigungselement 10 ein Halterungselement 12 auf. Das Halterungselement 12 weist eine hauptsächlich hohlzylindrische Form auf und verfügt an seiner Umfangsfläche über ein Aussengewinde 13, das mit einem Innengewinde eines nicht dargestellten Gegenstands zusammen wirken kann. Der nicht dargestellte Gegenstand kann beispielsweise als ein Haken ausgeführt sein, der auf das Halterungselement 12 aufgeschraubt und damit über das Befestigungselement 10 an der Wand 11 gehalten werden kann.

Das Befestigungselement 10 ist mittels einer nicht dargestellten Schweissverbindung fest mit einem Anlageelement 14 verbunden. Die beiden Elemente sind in diesem Ausführungsbeispiel aus Metall gefertigt.

Das Anlageelement 14 ist als eine kreisrunde Scheibe ausgeführt, durch deren Mittelachse 15 ein zweiter Teil 16 eines Einfüllkanals 17 verläuft, welcher an einer Austrittsöffnung 18 endet. Das Halterungselement 12 ist so auf dem Anlageelement 14 angeordnet, dass es koaxial zur Mittelachse 15 des Anlageelements 14 angeordnet ist. Ein erster Teil 19 des Einfüllkanals 17 verläuft innerhalb des Halterungselements 12 und endet mit einer Einfüllöffnung 20.

Das Anlageelement 14 weist eine ebene Haftfläche 21 auf, die zur Wand 11 hin ausgerichtet ist und die Austrittsöffnung 18 des Einfüllkanals 17 enthält. Auf der der Haftfläche 21 gegenüberliegenden Rückseite 22 des Anlageelements 14 ist das Halterungselement 12 angeordnet. Das Befestigungselement 10 ist mittels insgesamt vier Positionierungselemente 23a, 23b, 23c, 23d, von denen in der Fig. 1 nur zwei Positionierungselemente 23b und 23d zu sehen sind, an der Wand 11 positioniert und damit vorbefestigt. Die Positionierungselemente 23b, 23d sind als doppelseitige Klebebänder ausgeführt, auf deren Form bei der Beschreibung der Fig. 2 genauer eingegangen wird. Die Positionierungselemente 23a, 23b, 23c, 23d enthalten damit einen Haftklebstoff und weisen eine Dicke von ca. 0,8 mm auf, so dass die Haftfläche 21 des Anlageelements 14 und die Wand 11 einen Abstand von ca. 0,8 mm aufweisen.

Zum endgültigen Anbringen des Befestigungselements 10 an der Wand 11 kann über den Einfüllkanal 17 kann ein nicht dargestelltes fliessfähiges Haftmittel zwischen Haftfläche 21 und Wand 11 eingebracht werden. Das Haftmittel trocknet und härtet dann aus und das Befestigungsmittel 10 ist damit fest mit der Wand 11 verbunden.

Fig. 2 zeigt das Befestigungselement 10 in einer Sicht von der Wand 11 her, also eine Draufsicht auf die Haftfläche 21 des bis auf den zweiten Teil 16 des Einfüllkanals 17 zylinder- oder scheibenförmig ausgeführten Anlageelements 14. Die Darstellung ist dabei nicht genau massstäblich ausgeführt. Der Einfüllkanal 17 ist zylinderförmig ausgeführt und endet mit der kreisrunden Austrittsöffnung 18. Die Austrittsöffnung 18 ist so angeordnet, dass ihr Mittelpunkt 24 auf der Mittelachse 15 des Anlageelements 14 liegt. Die vier Positionierungselemente 23a, 23b, 23c, 23d sind jeweils als identische Ellipsen ausgeführt und gleichmässig um die Austrittsöffnung 18 herum verteilt. Die ellipsenförmigen Positionierungselemente 23a, 23b, 23c, 23d weisen jeweils eine lange Symmetrieachse und eine kurze Symmetrieachse auf, von denen nur jeweils eine lange Symmetrieachse 26a und eine kurze Symmetrieachse 27a des Positionierungselements 23a mit Bezugszeichen versehen sind. Die beiden Symmetrieachsen schneiden sich jeweils bei einem Flächenschwerpunkt 25a, 25b, 25c, 25d der Positionierungselemente 23a, 23b, 23c, 23d. Damit ergibt sich für jedes Positionierungselement 23a, 23b, 23c, 23d jeweils eine Strömungsrichtung 28a, 28b, 28c, 28d, welche ausgehend vom Mittelpunkt 24 der Austrittsöffnung 18 durch die Flächenschwerpunkte 25a, 25b, 25c, 25d der Positionierungselemente 23a, 23b, 23c, 23d verläuft. Die Positionierungselemente 23a, 23b, 23c, 23d sind so ausgerichtet, dass jeweils die lange und damit die längste Symmetrieachse 26a entlang der Strömungsrichtung 28a, 28b, 28c, 28d ausgerichtet ist. Durch die gleichmässige Verteilung der Positionierungselemente 23a, 23b, 23c, 23d um die Austrittsöffnung 18 ergibt sich zwischen zwei benachbarten Strömungsrichtung 28a, 28b, 28c, 28d jeweils ein Winkel von 90°.

Da alle Positionierungselemente 23a, 23b, 23c, 23d eine identische Form aufweisen und auch bezüglich ihrer jeweiligen Strömungsrichtung 28a, 28b, 28c, 28d identisch ausgerichtet sind, wird im Folgenden nur auf das Positionierungselement 23b eingegangen, wobei die Ausführungen auch für die Positionierungselemente 23a, 23c, 23d gelten.

Das Positionierungselement 23b weist senkrecht zur Strömungsrichtung 28b und damit parallel zur kurzen Symmetrieachse eine veränderliche Breite auf, die von einem Abstand zur Austrittsöffnung 18 oder genauer zum Abstand vom Mittelpunkt 24 der Austrittsöffnung 18 abhängt. Beispielhaft sind drei Breiten b1, b2, b3 eingezeichnet, wobei die erste Breite b1 von der Austrittsöffnung 18 gesehen vor, die zweite Breite b2 auf und die dritte Breite b3 hinter der kurzen Symmetrieachse liegt. Die Breite steigt zunächst mit steigendem Abstand zur Austrittsöffnung 18 stetig an und erreicht an der kurzen Symmetrieachse die maximale Breite b2. Anschliessend nimmt die Breite immer weiter ab und erreicht bei einem Maximalabstand 29 eine minimale Breite von quasi 0. Das Positionierungselement 23b weist ausserdem eine Länge l auf, welche sich aus einer Ausdehnung des Positionierungselements 23b in Strömungsrichtung 28b ergibt. Ein Verhältnis aus Länge l zu maximaler Breite b2 des Positionierungselements 23b ist dabei ca. 3 und damit grösser als 1,1.

Das Haftmittel wird über die Austrittsöffnung 18 zugeführt. Es fliesst dann radial nach aussen bis zu einem Rand 30 der Haftfläche 21. Damit ergibt sich eine Gesamt-Fliesstrecke 31 des Haftmittels, die an einem Rand 32 der Austrittsöffnung 18 beginnt und am Rand 30 der Haftfläche 21 endet. Da sowohl die Haftfläche 21, als auch die Austrittsöffnung 18 kreisrund ausgeführt sind, ist die Gesamt-Fliesstrecke 31 in alle Richtung gleich lang.

Das Positionierungselement 23b ist so angeordnet, dass sein Flächenschwerpunkt 25b einen Abstand 33 vom Rand 32 der Austrittsöffnung 18 aufweist, der ca. 62 % der Gesamt-Fliesstrecke 31 entspricht. Ausserdem ergibt sich zwischen dem Rand 32 der Austrittsöffnung 18 und dem Positionierungselement 23b eine erste freie Fliessstrecke 34 des Haftmittels, die ca. 29 % der Gesamt-Fliesstrecke 31 entspricht. Die erste freie Fliessstrecke 34 stellt gleichzeitig einen Minimalabstand des Positionierungselements 23b zur Austrittsöffnung 18 dar. Zusätzlich ergibt sich zwischen dem Positionierungselement 23b und dem Rand 30 der Haftfläche 21 eine zweite freie Fliessstrecke 35 des Haftmittels, die ebenfalls ca. 29 % der Gesamt-Fliesstrecke 31 entspricht.

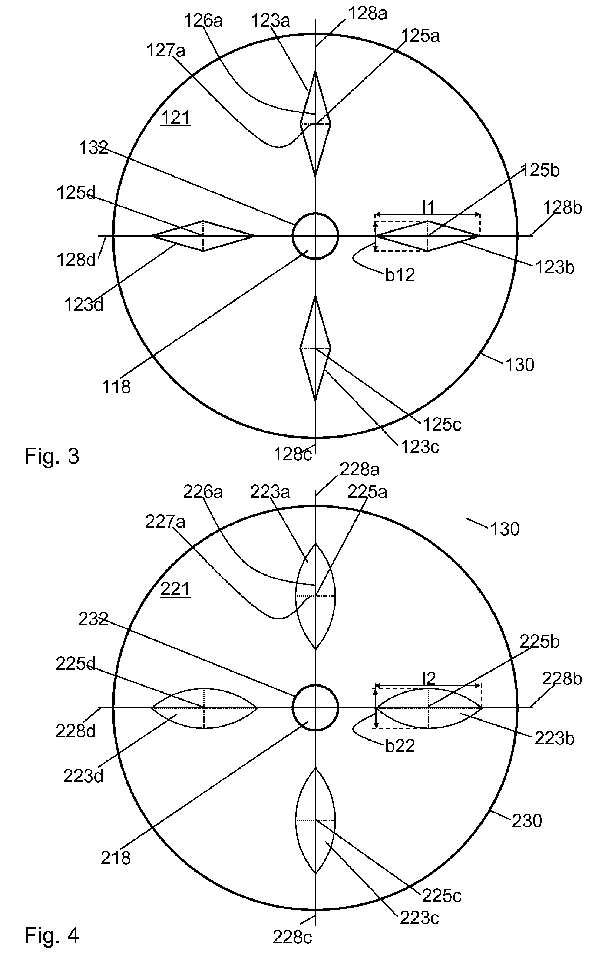

Beim zweiten Ausführungsbeispiel gemäss der Fig. 3 ist eine Haftfläche 121 und eine Austrittsöffnung 118 identisch wie im Ausführungsbeispiel gemäss Fig. 1 und 2 ausgeführt. Gleichmässig um die Austrittsöffnung 118 herum sind vier Positionierungselemente 123a, 123b, 123c, 123d angeordnet. Die Positionierungselemente 123a, 123b, 123c, 123d sind in diesem Ausführungsbeispiel aufgesprüht und weisen eine Dicke von ca. 0,3 mm auf.

Die rautenförmigen Positionierungselemente 123a, 123b, 123c, 123d weisen jeweils eine lange Symmetrieachse und eine kurze Symmetrieachse auf, von denen nur jeweils eine lange Symmetrieachse 126a und eine kurze Symmetrieachse 127a des Positionierungselements 123a mit Bezugszeichen versehen sind. Die beiden Symmetrieachsen schneiden sich jeweils bei einem Flächenschwerpunkt 125a, 125b, 125c, 125d der Positionierungselemente 123a, 123b, 123c, 123d. Damit ergibt sich für jedes Positionierungselement 123a, 123b, 123c, 123d jeweils eine Strömungsrichtung 128a, 128b, 128c, 128d. Die Positionierungselemente 123a, 123b, 123c, 123d sind so ausgerichtet, dass jeweils die lange und damit die längste Symmetrieachse 126a entlang der Strömungsrichtung 128a, 128b, 128c, 128d ausgerichtet ist.

Da alle Positionierungselemente 123a, 123b, 123c, 123d eine identische Form aufweisen und auch bezüglich ihrer jeweiligen Strömungsrichtung 128a, 128b, 128c, 128d identisch ausgerichtet sind, wird im Folgenden nur auf das Positionierungselement 123b eingegangen, wobei die Ausführungen auch für die Positionierungselemente 123a, 123c, 123d gelten.

Das Positionierungselement 123b weist senkrecht zur Strömungsrichtung 128b und damit parallel zur kurzen Symmetrieachse eine veränderliche Breite auf, die von einem Abstand zur Austrittsöffnung 118 abhängt. Die Breite steigt zunächst mit steigendem Abstand zur Austrittsöffnung 118 stetig an und erreicht an der kurzen Symmetrieachse eine maximale Breite b12. Anschliessend nimmt die Breite immer weiter ab und erreicht bei einem Maximalabstand eine minimale Breite von quasi 0. Das Positionierungselement 123b weist ausserdem eine Länge l1 auf, welche sich aus einer Ausdehnung des Positionierungselements 123b in Strömungsrichtung 128b ergibt. Ein Verhältnis aus Länge l1 zu maximaler Breite b12 des Positionierungselements 123b ist dabei ca. 3,5 und damit grösser als 1,1.

Das Positionierungselement 123b ist so angeordnet, dass sein Flächenschwerpunkt 125b einen Abstand von einem Rand 132 der Austrittsöffnung 118 aufweist, der ca. 50 % der Gesamt-Fliesstrecke entspricht. Ausserdem ergibt sich zwischen dem Rand 132 der Austrittsöffnung 118 und dem Positionierungselement 123b eine erste freie Fliessstrecke des Haftmittels, die ca. 21 % einer Gesamt-Fliesstrecke entspricht. Die erste freie Fliessstrecke stellt gleichzeitig einen Minimalabstand des Positionierungselements 123b zur Austrittsöffnung 118 dar. Zusätzlich ergibt sich zwischen dem Positionierungselement 123b und einem Rand 130 der Haftfläche 121 eine zweite freie Fliessstrecke des Haftmittels, die ebenfalls ca. 21 % der Gesamt-Fliessstrecke entspricht.

Beim dritten Ausführungsbeispiel gemäss der Fig. 4 ist eine Haftfläche 221 und eine Austrittsöffnung 218 identisch wie im Ausführungsbeispiel gemäss Fig. 1 und 2 ausgeführt. Gleichmässig um die Austrittsöffnung 218 herum sind vier Positionierungselemente 223a, 223b, 223c, 223d angeordnet.

Die Positionierungselemente 223a, 223b, 223c, 223d weisen eine Form auf, welche sich aus zwei Kreisbögen ergibt. Sie weisen jeweils eine lange Symmetrieachse und eine kurze Symmetrieachse auf, von denen nur jeweils eine lange Symmetrieachse 226a und eine kurze Symmetrieachse 227a des Positionierungselements 223a mit Bezugszeichen versehen sind. Die beiden Symmetrieachsen schneiden sich jeweils bei einem Flächenschwerpunkt 225a, 225b, 225c, 225d der Positionierungselemente 223a, 223b, 223c, 223d. Damit ergibt sich für jedes Positionierungselement 223a, 223b, 223c, 223d jeweils eine Strömungsrichtung 228a, 228b, 228c, 228d. Die Positionierungselemente 223a, 223b, 223c, 223d sind so ausgerichtet, dass jeweils die lange und damit die längste Symmetrieachse 226a entlang der Strömungsrichtung 228a, 228b, 228c, 228d ausgerichtet ist.

Da alle Positionierungselemente 223a, 223b, 223c, 223d eine identische Form aufweisen und auch bezüglich ihrer jeweiligen Strömungsrichtung 218a, 228b, 228c, 228d identisch ausgerichtet sind, wird im Folgenden nur auf das Positionierungselement 223b eingegangen, wobei die Ausführungen auch für die Positionierungselemente 223a, 223c, 223d gelten.

Das Positionierungselement 223b weist senkrecht zur Strömungsrichtung 228b und damit parallel zur kurzen Symmetrieachse eine veränderliche Breite auf, die von einem Abstand zur Austrittsöffnung 218 abhängt. Die Breite steigt zunächst mit steigendem Abstand zur Austrittsöffnung 218 stetig an und erreicht an der kurzen Symmetrieachse eine maximale Breite b22. Anschliessend nimmt die Breite immer weiter ab und erreicht bei einem Maximalabstand eine minimale Breite von quasi 0. Das Positionierungselement 223b weist ausserdem eine Länge l2 auf, welche sich aus einer Ausdehnung des Positionierungselements 223b in Strömungsrichtung 228b ergibt. Ein Verhältnis aus Länge l2 zu maximaler Breite b22 des Positionierungselements 223b ist dabei ca. 2,8 und damit grösser als 1,1.

Das Positionierungselement 223a ist so angeordnet, dass sein Flächenschwerpunkt 225a einen Abstand von einem Rand 232 der Austrittsöffnung 218 aufweist, der ca. 50 % der Gesamt-Fliesstrecke entspricht. Ausserdem ergibt sich zwischen dem Rand 232 der Austrittsöffnung 218 und dem Positionierungselement 223b eine erste freie Fliessstrecke des Haftmittels, die ca. 21 % einer Gesamt-Fliesstrecke entspricht. Die erste freie Fliessstrecke stellt gleichzeitig einen Minimalabstand des Positionierungselements 223b zur Austrittsöffnung 218 dar. Zusätzlich ergibt sich zwischen dem Positionierungselement 223b und einem Rand 230 der Haftfläche 221 eine zweite freie Fliessstrecke des Haftmittels, die ebenfalls ca. 21 % der Gesamt-Fliessstrecke entspricht.

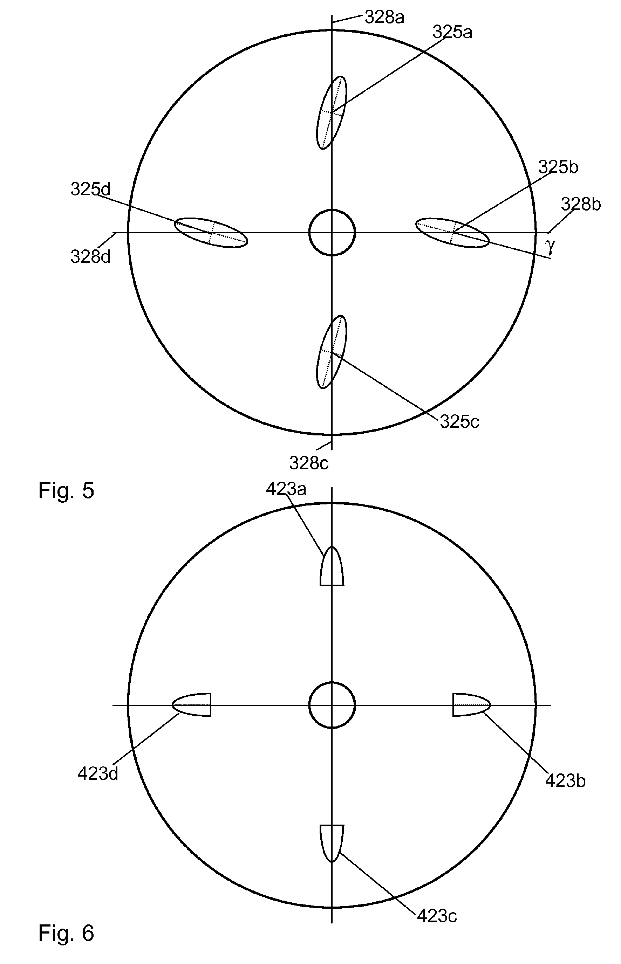

Das dritte Ausführungsbeispiel gemäss Fig. 5 unterscheidet sich vom Ausführungsbeispiel gemäss Fig. 1 und 2 nur dadurch, dass die ellipsenförmigen Positionierungselemente 323a, 323b, 323c, 323d um ihren jeweiligen Flächenschwerpunkt 323a, 323b, 323c, 323d um jeweils einen Winkel γ von 15° im Uhrzeigersinn verdreht sind. Damit schliessen eine längste Symmetrieachse 326b und die Strömungsrichtung 318b einen Winkel γ von 15° ein.

Das vierte Ausführungsbeispiel gemäss Fig. 6 unterscheidet sich vom Ausführungsbeispiel gemäss Fig. 1 und 2 nur dadurch, dass die Positionierungselemente 423a, 423b, 423c, 423d als halbe Ellipsen ausgeführt sind, die erst bei der kurzen Symmetrieachse der zugehörigen vollständigen Ellipse beginnen.

## Patentansprüche

1. Befestigungselement zur Anbringung an einer Wand (11) mit
- einem Halterungselement (12) zur Halterung eines Gegenstands,
- einem Anlageelement (14) mit einer Haftfläche (21, 121, 221) und einer Rückseite (22),
- einem Einfüllkanal (17), welcher von der Rückseite (22) des Anlageelements (14) zu einer Austrittsöffnung (18, 118, 218) in der Haftfläche (21, 121, 221) des Anlageelements (14) führt und über welchen ein fliessfähiges Haftmittel zwischen Haftfläche (21, 121, 221) und Wand (11) bringbar ist und
- einem Positionierungselement (23a, 23b, 23c, 23d; 123a, 123b, 123c, 123d; 223a, 223b, 223c, 223d; 323a, 323b, 323c, 323d; 423a, 423b, 423c, 423d), mittels welchem das Anlageelement (14) an der Wand (11) positioniert werden kann,
**dadurch gekennzeichnet, dass**
- das Positionierungselement (23a, 23b, 23c, 23d; 123a, 123b, 123c, 123d; 223a, 223b, 223c, 223d; 323a, 323b, 323c, 323d; 423a, 423b, 423c, 423d) eine veränderliche, von einem Abstand zur Austrittsöffnung (18, 118, 218) abhängige Breite aufweist,
- die Breite des Positionierungselements (23a, 23b, 23c, 23d; 123a, 123b, 123c, 123d; 223a, 223b, 223c, 223d; 323a, 323b, 323c, 323d; 423a, 423b, 423c, 423d) sich aus einer Ausdehnung parallel zur Haftfläche (21, 121, 221) und senkrecht zu einer Strömungsrichtung (28a, 28b, 28c, 28d; 128a, 128b, 128c, 128d; 228a, 228b, 228c, 228d; 328a, 328b, 328c, 328d) von der Austrittsöffnung (18, 118, 218) durch einen Flächenschwerpunkt (25a, 25b, 25c, 25d; 125a, 125b, 125c, 125d; 225a, 225b, 225c, 225d; 325a, 325b, 325c, 325d) des Positionierungselements (23a, 23b, 23c, 23d; 123a, 123b, 123c, 123d; 223a, 223b, 223c, 223d; 323a, 323b, 323c, 323d; 423a, 423b, 423c, 423d) ergibt,
- die Breite mit steigendem Abstand zur Austrittsöffnung (18, 118, 218) abnimmt und
- die Breite bei einem Maximalabstand (29) zur Austrittsöffnung (18, 118, 218) minimal ist.

2. Befestigungselement nach Anspruch 1,
**dadurch gekennzeichnet, dass**
das Positionierungselement ((23a, 23b, 23c, 23d; 123a, 123b, 123c, 123d; 223a, 223b, 223c, 223d; 323a, 323b, 323c, 323d; 423a, 423b, 423c, 423d)) so angeordnet ist, dass sein Flächenschwerpunkt (25a, 25b, 25c, 25d; 125a, 125b, 125c, 125d; 225a, 225b, 225c, 225d; 325a, 325b, 325c, 325d) in einem Bereich von 20 bis 70 % einer Gesamt-Fliessstrecke (31) des Haftmittels liegt.

3. Befestigungselement nach Anspruch 2,
**dadurch gekennzeichnet, dass**
das Positionierungselement (23a, 23b, 23c, 23d; 123a, 123b, 123c, 123d; 223a, 223b, 223c, 223d; 323a, 323b, 323c, 323d; 423a, 423b, 423c, 423d) so angeordnet ist, dass sich sowohl zwischen der Austrittsöffnung (18, 118, 218) in der Haftfläche (21, 121, 221) des Anlageelements (14) und dem Positionierungselement (23a, 23b, 23c, 23d; 123a, 123b, 123c, 123d; 223a, 223b, 223c, 223d; 323a, 323b, 323c, 323d; 423a, 423b, 423c, 423d) als auch zwischen Positionierungselement (23a, 23b, 23c, 23d; 123a, 123b, 123c, 123d; 223a, 223b, 223c, 223d; 323a, 323b, 323c, 323d; 423a, 423b, 423c, 423d) und einem Rand (30, 130, 230) der Haftfläche (21, 121, 221) des Anlageelements (14) eine freie Fliessstrecke (34, 35) des Haftmittels ergibt, welche mindestens 20 % der Gesamt-Fliessstrecke (31) des Haftmittels beträgt.

4. Befestigungselement nach Anspruch 1, 2 oder 3,
**dadurch gekennzeichnet, dass**
das Positionierungselement (23a, 23b, 23c, 23d; 123a, 123b, 123c, 123d; 223a, 223b, 223c, 223d; 323a, 323b, 323c, 323d; 423a, 423b, 423c, 423d) eine Länge (l, l1, l2) aufweist, welche sich aus einer Ausdehnung in Strömungsrichtung (23a, 23b, 23c, 23d; 123a, 123b, 123c, 123d; 223a, 223b, 223c, 223d; 323a, 323b, 323c, 323d; 423a, 423b, 423c, 423d) ergibt und ein Verhältnis aus Länge (l, l1, l2) zu einer maximaler Breite (b2, b12, b22) des Positionierungselements (23a, 23b, 23c, 23d; 123a, 123b, 123c, 123d; 223a, 223b, 223c, 223d; 323a, 323b, 323c, 323d; 423a, 423b, 423c, 423d) grösser als 1,1 ist.

5. Befestigungselement nach einem der Ansprüche 1 bis 4,
**dadurch gekennzeichnet, dass**
die Breite des Positionierungselements (23a, 23b, 23c, 23d; 123a, 123b, 123c, 123d; 223a, 223b, 223c, 223d; 323a, 323b, 323c, 323d; 423a, 423b, 423c, 423d) ausgehend von einem Minimalabstand zur Austrittsöffnung (18, 118, 218) zunächst zunimmt.

6. Befestigungselement nach einem der Ansprüche 1 bis 5,
**dadurch gekennzeichnet, dass**
das Positionierungselement (23a, 23b, 23c, 23d; 123a, 123b, 123c, 123d; 223a, 223b, 223c, 223d; 323a, 323b, 323c, 323d; 423a, 423b, 423c, 423d) wenigstens eine Symmetrieachse (26a, 27a, 126a, 127a, 226a, 227a) aufweist und eine längste Symmetrieachse (26a, 126a, 226a) einen Winkel γ von maximal 60° mit der Strömungsrichtung (28a, 28b, 28c, 28d; 128a, 128b, 128c, 128d; 228a, 228b, 228c, 228d; 328a, 328b, 328c, 328d; 428a, 428b, 428c, 428d) einschliesst.

7. Befestigungselement nach einem der Ansprüche 1 bis 6,
**dadurch gekennzeichnet, dass**
das Positionierungselement (23a, 23b, 23c, 23d; 323a, 323b, 323c, 323d) ellipsenförmig ausgeführt ist.

8. Befestigungselement nach einem der Ansprüche 1 bis 6,
**dadurch gekennzeichnet, dass**
das Positionierungselement (123a, 123b, 123c, 123d) rautenförmig ausgeführt ist.

9. Befestigungselement nach einem der Ansprüche 1 bis 6,
**dadurch gekennzeichnet, dass**
das Positionierungselement (223a, 223b, 223c, 223d) eine Form aufweist, welche sich aus zwei Bögen, insbesondere zwei Kreisbögen ergibt.

10. Befestigungselement nach einem der Ansprüche 1 bis 9,
**dadurch gekennzeichnet, dass**
das Positionierungselement (23a, 23b, 23c, 23d; 123a, 123b, 123c, 123d; 223a, 223b, 223c, 223d; 323a, 323b, 323c, 323d; 423a, 423b, 423c, 423d) eine Dicke zwischen 0,05 und 3,00 mm aufweist.

11. Befestigungselement nach einem der Ansprüche 1 bis 10,
**dadurch gekennzeichnet, dass**
das Positionierungselement (23a, 23b, 23c, 23d; 123a, 123b, 123c, 123d; 223a, 223b, 223c, 223d; 323a, 323b, 323c, 323d; 423a, 423b, 423c, 423d) einen Haftklebstoff aufweist.

12. Befestigungselement nach einem der Ansprüche 1 bis 11,
**dadurch gekennzeichnet, dass**
das Positionierungselement (123a, 123b, 123c, 123d) aufsprühbar ausgeführt ist.

13. Befestigungselement nach einem der Ansprüche 1 bis 12,
**gekennzeichnet durch**
mehrere Positionierungselemente (23a, 23b, 23c, 23d; 123a, 123b, 123c, 123d; 223a, 223b, 223c, 223d; 323a, 323b, 323c, 323d; 423a, 423b, 423c, 423d), welche insbesondere gleichmässig um die Austrittsöffnung (18, 118, 218) verteilt sind.

14. Befestigungselement nach einem der Ansprüche1 bis 13,
**dadurch gekennzeichnet, dass**
das Halterungselement (12) eine hauptsächlich hohlzylindrische Form aufweist und einen ersten Teil (19) des Einfüllkanals (17) bildet.

15. Befestigungselement nach einem der Ansprüche1 bis 14,
**dadurch gekennzeichnet, dass**
das Anlageelement (14) als eine kreisrunde Scheibe ausgeführt ist, durch deren Mittelachse (15) ein zweiter Teil (16) des Einfüllkanals (17) verläuft, welcher an der Austrittsöffnung (18, 118, 218, 318, 418) endet.
